# EUROPEAN PATENT SPECIFICATION

(11) **EP 3 950 854 B1**
(45) Date of publication and mention of the grant of the patent: **07.06.2023**
(21) Application number: 20189868.1
(22) Date of filing: 06.08.2020
(51) Int. Cl.: C09D 7/40, C09D 5/02, C08K 3/34, C09D 133/04

(54) **COATED BUILDING BOARDS**
BESCHICHTETE BAUPLATTEN
PANNEAUX DE CONSTRUCTION ENDUITS

(43) Date of publication of application: 09.02.2022
(73) Proprietor: Heubach Holding Switzerland Ltd, 4132 Muttenz (CH)
(72) Inventor: LIU, Chen, Shanghai 201802 (CN); NIU, Lin, Shanghai 201600 (CN); LIU, Xiaochi, Shanghai 200237 (CN); XIAO, Qinbo, Shanghai 201601 (CN)
(74) Representative: Rippel, Hans Christoph

(56) References cited:
- EP-A1- 0 967 086
- EP-A1- 1 437 390
- JP-A- 2008 273 055

## Description

### Technical Field:

The invention relates to a coated building board comprising a colour imaging layer for water-based ink and a method for the preparation of the coated building boards. The invention relates particularly to a coated building board, wherein the colour imaging layer contains a molecular sieve.

### Background of the invention:

Coloured patterns can be applied on various types of decorative building boards by inkjet printing, for example, which allows efficient production and individual design. Compared with solvent based ink and UV ink, water-based ink has attracted more attention, because pigments with higher weather durability can be applied, which are suitable for external wall application. A further important advantage is that water-based inks are more environment-friendly.

On the other hand, performing waterborne inkjet printing is challenging, because water-based ink is hard to cure compared with solvent ink or UV ink. Water-based ink therefore tends to penetrate into the base material, particularly if the base material is porous, or to spread on the surface if the base material is non-porous. This leads to images with low quality.

To improve the colour strength of images printed with water-based inks on decorative building boards JP 2007154433 suggests an ink receiving layer fixed on the surface of the building board. The ink-receiving layer is a water-based paint comprising an extender pigment and a hygroscopic resin. JP 2007167826 describes the use of such coating composition to decrease ink consumption for inkjet printing. To suppress the permeation of ink into an ink receiving layer and to stably fix ink an ink receiving layer comprising polysiloxane is suggested in JP 2015051549.

JP 2008273055 discloses a coating composition for ink receiving layers comprising 20 to 80 weight% of the solid content of the coating composition of a mica filler to enhance durability of the coating layer.

JP 2008063832 provides a decorative building board enhancing ink fixability to an ink receiving layer and preventing strength degradation of the layer. To achieve the desired effects the ink receiving layer comprises filler with a high aspect ratio of 3 to 70, which can be finely split on the surface of the layer.

The problem to be solved by the present invention is to provide building boards which can be used as base material for high quality images printed with water-based ink. In particular the resolution of the printed images, the colour strength and the stability of the images shall be improved. To achieve the goals of the present invention the penetration of water-based ink into the building board shall be reduced to avoid low colour strength and colour bleeding shall be avoided to achieve improved resolution of the printed patterns.

### Description of the invention:

The problem is solved by a colour imaging layer (ink receiving layer) comprising a molecular sieve.

A molecular sieve is a porous material with pores of relatively uniform size. The pore diameters of molecular sieves are similar in size to small molecules, and thus large molecules cannot be adsorbed in contrary to smaller molecules, such as water for example. The diameter of a molecular sieve is measured in ångströms (Å) or nanometres (nm). Molecular sieves are classified in microporous materials having pore diameters of less than 2 nm (20 Å), mesoporous materials with pore diameters between 2 and 50 nm (20-500 Å) and macroporous materials having pore diameters of greater than 50 nm (500 Å). Macroporous materials having a pore size of more than 200 nm (2000 Å) are not regarded as molecular sieves within the meaning of the present invention.

The coated building boards of the present invention are obtained by an aqueous coating composition comprising an acrylic emulsion and a molecular sieve, which can be cured at the surface of the building board.

Thus, an embodiment of the present invention is a method for preparation of a coated building board comprising a colour imaging layer, wherein the method comprises:
a) application of an aqueous coating composition comprising
   i) 20% to 80% by weight of the coating composition of an acrylic polymer emulsion, and
   ii) 0.2% to 20% by weight of the coating composition of a molecular sieve on at least of a part of the surface of the building board, and
b) curing the coating composition.

To achieve the desired effects of the invention the use of microporous molecular sieves is preferred. Preferred molecular sieves have a narrow pore size distribution, wherein at least 90% of the pores of the molecular sieve have pore diameters between 0.1 nm to 2 nm, more preferably between 0.2 nm to 0.8 nm.

Microporous molecular sieves can be selected for example from the group of aluminosilicate minerals (zeolites), phosphorous modified small-pore zeolites, porous glasses, activated carbon, and small-porous clays, such as montmorillonite.

Preferred molecular sieves are able to adsorb molecules having an effective diameter of 0.5 nm or smaller, such as water. Useful sieves are able to adsorb at least 5 wt.-% of water, more favourably more than 10 wt.-% of water at 20°C compared to the weight of the molecular sieve.

Preferred microporous molecular sieves are selected from the group of zeolites. Particularly preferred are 3 Å, 4 Å or 5 Å zeolites.

Suitable zeolites have the general formula (I)

Mⁿ⁺_{x/n} • [(AlO₂)⁻ₓ • (SiO₂)_{y}] • z H₂O (I)

wherein
- n: is 1, 2, 3 or 4, preferably n is 1 or 2;
- M: is selected from the group of monovalent, divalent, trivalent or tetravalent metals or mixtures thereof, preferably M is selected from the group of alkali metals, alkaline earth metals and mixtures thereof, wherein metals of the group of potassium, sodium, magnesium, and calcium are most preferred;
- x: is between 1 and 10, preferably between 1 and 3 and
the ratio x/y of the zeolites of formula (I) is between 1 and 5, more preferably between 1 and 3 and most preferably the ratio is approx. 2, that means between 1.8 and 2.2.

The water content of the zeolites can vary in a wide range. For example, water can be removed from the zeolites by heating without the destruction of the structure of the zeolites. Vice versa zeolites can absorb water until the capacity of the compound is exhausted. Dried zeolites of the preferred zeolite type (x and x/y is in the range of 1 to 3), for example, are able to adsorb up to 30 weight% of water compared to the weight of the zeolite. The water content z of the zeolites of formula (I) is typically in the range of from 0 to 50, preferably between 1 and 30. For preferred zeolites, wherein x is in the range of 1 to 3 and the x/y ratio is in the range of 1 to 3, z is typically less than 10.

Most preferred molecular sieves of the zeolite type are 3 Å, 4 Å or 5 Å zeolite sieves.

Typical 3 Å sieves have the chemical formula

x' K₂O • x" Na₂O • Al₂O₃• y SiO₂ • z H₂O

wherein
- x' and x": are in the range of 0.3 to 0.7, and x' + x" is 1;
- y: is in the range of 1.8 to 2.2, preferably y is 2, and
- z: is less than 8, z is preferably in the range of 3 to 6, typically 4.5.

Typical 4 Å sieves have the chemical formula

Na₂O • Al₂O₃ • y SiO₂ • z H₂O

wherein
- y: is in the range of 1.8 to 2.2, preferably y is 2, and
- z: is less than 8, z is preferably in the range of 3 to 6, typically 4.5.

Typical 5 Å sieves have the chemical formula

x' CaO • x" Na₂O • Al₂O₃ • y SiO₂ • z H₂O

wherein
- x': is in the range of 0.6 to 0.8,
- x": is in the range of 0.2 to 0.4, and
- x' + x": is 1;
- y: is in the range of 1.8 to 2.2, preferably y is 2, and
- z: is less than 8, z is preferably in the range of 3 to 6, typically 4.5.

A broad variety of microporous molecular sieves including 3 Å, 4 Å and 5 Å zeolites are commercially available. However, 4Å sieves can be prepared by mixing aqueous solutions of sodium silicate and sodium aluminate at 80°C. Then the sieve is activated by baking at 400°C. 3Å and 5Å sieves can be prepared through cation exchange of sodium for potassium (for 3Å sieves) or sodium for calcium (for 5Å sieves) starting from a 4Å sieve.

A mesoporous molecular sieve is for example silicon dioxide. Examples for macroporous molecular sieves are porous silica compounds with pore diameters of 200 - 1000 Å.

The pore size of molecular sieves is depending on the size of the lattice of the material itself, and it is mainly determined by the size of cationic ions. The structure of a broad variety of zeolites including the size of the channels (pores) is summarized in "Atlas of Zeolite Framework Types" (Baerlocher et al., Elsevier, Sixth Revised Edition, 2007).

Preferred molecular sieves are able to adsorb molecules having an effective diameter of 0.5 nm or less, such as for example water. Useful sieves are able to adsorb at least 5 wt.-% of water, more favourably more than 10 wt.-% of water compared to the weight of the molecular sieve.

The molecular sieve is preferably applied in powder from to the aqueous coating composition. Preferred powders have an average particle diameter in the range of 0.1 µm to 250 µm, preferable the average diameter is between 1 µm and 50 µm. The average diameter of at least 80% of the particles, particularly at least 90%, should be fall within the range.

The size distribution of molecular sieve particles can be determined by laser diffraction analysis. The mean diameters can be determined by laser light scattering, for example by using a Horiba LA 940 or Mastersizer 3000 from Malvern using the "Mie Scattering Theory" evaluation. In case of particles having axes of different length, such a particle having the shape of an ellipsoid or of a disk, the largest axis determines the mean diameter. The particles of the present invention have preferably a narrow particle size distribution of Gaussian shape. Preferably the standard deviation of the particle size distribution is between 10% and 120% of the mean diameter. More preferably the standard deviation is between 20% and 90%.

The coating composition comprises further an acrylic emulsion. The acrylic emulsion comprises an acrylic polymer obtainable by free radical polymerization of an acrylic monomer composition, wherein the acrylic monomers are selected from the group consisting of acrylate, methacrylate, alkyl acrylate, alkyl methacrylate, hydroxyalkyl acrylate, hydroxyalkyl methacrylate, epoxyalkyl acrylate, epoxyalkyl methacrylate, acrylonitrile, methacrylonitrile, acrylamide, methacrylamide, acrylic acid and mixtures thereof and optionally ethylenically unsaturated comonomers.

Preferred acrylic polymers derive from monomers of the group consisting of acrylate, methacrylate, (C₁-C₄)-alkyl acrylate, (C₁-C₄)-alkyl methacrylate, acrylic acid and mixtures thereof and optionally ethylenically unsaturated comonomers.

Preferred comonomers are selected from the group of (C1-C6)-alkylene, particularly ethylene, propylene and butylene, and styrene.

The acrylic polymer emulsions include also emulsions of acrylic silicone resins.

The acrylic monomer composition comprises preferably at least 50% by weight acrylic monomers and less than 50% by weight of ethylenically unsaturated comonomers.

The content of the acrylic polymer in the acrylic emulsion is in the range of 5 to 75 weight%, preferably between 10 and 70 weight%, particularly preferred between 20 and 60 weight%.

The water content of the acrylic polymer emulsion is between 25 and 75 weight%, preferably between 30 and 60 weight%.

The aqueous coating composition comprising the acrylic polymer emulsion and the molecular sieve comprises particularly 1 weight% to 10 weight% of the molecular sieve. The amount of the acrylic polymer emulsion is preferably in the range of 25 weight% to 60 weight%, particularly in the range of 30 to 55 weight% based on the total weight of the aqueous coating composition.

The weight ratio of the microporous sieve to the acrylic polymer in the aqueous coating composition is preferably from 1 : 1 to 1 : 100. More preferred is a ratio of 1 : 1,5 to 1 : 20 and most preferably the ratio is in the range of 1 : 2 to 1 : 10.

The aqueous coating composition may comprise optional additives. Examples for useful additives are dispersants, wetting agents, thickeners, defoamer, filler, film-former, matting agents, neutralizers or biocides. The additives may be applied to the acrylic polymer emulsion or to the aqueous coating composition comprising the emulsion.

Customary additives include wetting agents or dispersants, such as sodium, potassium, or ammonium polyphosphates, alkali metal salts or ammonium salts of polyacrylic acids and of polymaleic acid, styrene maleic anhydride copolymers, polyphosphonates, amino alcohols, such as, for example, 2-amino-2-methylpropanol. The dispersants or wetting agents are preferably used in an amount of up to 2% by weight, based on the total weight of the aqueous coating composition.

Usually the acrylic polymer of the acrylic polymer emulsion is self-emulsifiable. Thus, the amount of additional dispersants can be low. The content of dispersants in the aqueous coating composition is below 5 weight%, preferably in the range of 0 to 1 weight%, based on the total weight of the aqueous coating composition.

Defoaming additives are for example fatty acid alkyl ester alkoxylates, silicone oils, organopolysiloxanes, such as polydimethylsiloxanes, polyether modified polysiloxanes, silanized silica, paraffins, including paraffin oils, waxes, polyether, such as polyethylene glycol, polypropylene glycol or EO/PO copolymers, and mixtures thereof.

Deafoamers are typically used in an amount of less than 5 weight%, particularly in the range of from 0 to 2 weight%, based on the total amount of the aqueous coating composition.

Matting agents may be present in the aqueous coating composition in an amount of from 0 to 15 weight% based on the total weight of the coating composition. Preferred is a content of matting agents of from 1 to 10 weight%. Suitable matting agents are silica dioxide and waxes.

Thickeners which may be employed in the aqueous coating composition are for example cellulose derivatives, such as methylcellulose, hydroxyethylcellulose and carboxymethylcellulose, furthermore casein, gum arabic, starch, sodium alginate, polyvinyl alcohol, polyvinylpyrrolidone, styrene/maleic anhydride polymers polyetherurethanes, which can be hydrophically modified, hydrophobically modified acrylic acid copolymers (HASE), sodium polyacrylates, organosilicones, and polyetherpolyols.

Water-soluble copolymers based on acrylic and (meth)acrylic acid, such as acrylic acid/acrylamide and (meth)acrylic acid/acrylic ester copolymers have also thickening properties.

Inorganic thickeners, such as, for example, bentonites, may also be used.

The use of thickeners of the group of acrylic polymers and polyurethanes is particularly favoured.

The amount of thickener based on the total weight of the coating composition is less than 10 weight%, preferably less than 5 weight%.

Suitable film-former are for example polyvinylpyrollidone, glycol ethers or glycol esters or combinations thereof. Examples for glycol ethers are ethylene glycol monomethyl ether, ethylene glycol monoethyl ether, ethylene glycol monopropyl ether, ethylene glycol monoisopropyl ether, ethylene glycol monobutyl ether, ethylene glycol monophenyl ether, ethylene glycol monohexyl ether, diethylene glycol monomethyl ether, diethylene glycol monoethylether, diethylene glycol mono-n-butyl ether, diethylene glycol mono-n-hexyl ether, propylene glycol monomethyl ether, propylene glycol monoethyl ether, propylene glycol monobutyl ether, propylene glycol monohexyl ether, polyethylene glycol ether, polypropylene glycol ether, ethylene glycol dimethyl ether, ethylene glycol diethyl ether, and ethylene glycol dibutyl ether. Glycol esters are for example ethylene glycol methyl ether acetate, ethylene glycol monoethyl ether acetate, ethylene glycol monobutyl ether acetate, and propylene glycol methyl ether acetate.

The content of film-forming additives is usually less than 10 weight% based on the total amount of the aqueous coating composition. An amount in the range of 0.5 to 5 weight% is preferred.

Fillers which may be used are known to the person skilled in the art. Preferred fillers are silicates, such as, for example, kaolin, talc, mica, magnesite, alkaline earth metal carbonates, such as, for example calcite, chalk, dolomite, alkaline earth metal sulfates, such as, for example, calcium sulfate, and silica. The fillers can be used either as individual components or as filler mixtures. In general, finely divided fillers are preferred.

The aqueous coating composition optionally comprises one or more co-solvents. The co-solvents may be part of an additive composition. Minor amounts of co-solvents can be added to improve the solubility of the components of the aqueous coating composition. The amount of co-solvent should be less than 10 weight% based on the total weight of the coating composition. Preferably the co-solvent content is less than 5 weight%.

Suitable are water miscible co-solvents, for example methanol, ethanol, propanol, butanol, benzyl alcohol, ethylene glycol, di-ethylene glycol, propylene glycol, di-propylene glycol, glycerol, polyethylene glycol, polypropylene glycol, and monomethyl ether or di-methyl ether of ethylene glycol or propylene glycol.

For some applications an adjustment of the pH-value of the aqueous coating composition is desired. To adjust the pH-value common neutralizers can be used. Examples for neutralizers are sodium hydroxide, potassium hydroxide, or amine derivatives. For most applications a pH-value in the range of 7 to 11 is desired. The neutralizer is added to the coating composition until the desired pH-value is achieved.

The aqueous coating composition can further comprise pigments. The pigments can be selected from inorganic pigments or organic pigments. Pigments which may be used are all pigments known to the person skilled in the art for emulsion paints. Preferred pigments are, for example, titanium dioxide, preferably in the form of rutile, barium sulfate, zinc oxide, zinc sulfide, basic lead carbonate, antimony trioxide and lithopone (zinc sulfide and barium sulfate). However, the aqueous preparations may also contain coloured pigments, for example iron oxides, carbon black, graphite, luminescent pigments, zinc yellow, zinc green, ultramarine, manganese black, antimony black or manganese violet. Organic pigments are, for example, azo dyes, quinacridone, phthalocyanine, isoindolinone, sepia, gamboge, indigo, anthraquinoid and indigoid dyes and dioxazine, and metal complex pigments.

The most preferred pigments are titanium dioxide, zinc oxide, barium sulfate and lithopone.

The pigments can be added to the aqueous coating composition in an amount of up to 30 weight%, based on the total weight of the aqueous coating composition. Light pigments can be typically added in high amounts, whereas dark pigments are typically added in lower amounts of up to 15 weight%.

Preferably light pigments, such as titanium dioxide zinc oxide, barium sulfate and lithopone, are added to the coating composition in an amount of 5 to 25 weight%.

The pigments can be blended with an extender pigment. Extender pigments are, for example, silica, barium carbonate, calcium carbonate, alumina, aluminum hydroxide, diatomaceous earth, etc.

The coating composition may comprise optionally further polymers in addition to the acrylic polymer. Suitable optional polymers can be selected from the group of hygroscopic polymers. E.g. polyvinyl acetate, polyvinyl alcohol, and polyurethane can be optionally added.

The optional polymers can be added in an amount of up to 50 weight%, based on the total weight of the aqueous coating composition. The content of the optional polymers in the coating composition is preferably between 0 and 30 weight%, particularly between 5 and 25 weight%. Particularly preferred are coating compositions which comprise no optional polymers or the content of the optional polymers is below 5 wt.-%.

The molecular sieve can be added to the acrylic polymer emulsion to obtain the aqueous coating composition. The molecular sieve can be simply incorporated in the acrylic polymer emulsion by stirring until the sieve is fully dispersed. Additives and pigments can be added, usually step by step, under stirring.

Beside the water which is already present in the acrylic polymer emulsion, additional water can be added to the aqueous coating composition, if appropriate. However, the overall content of water in the coating composition should be less than 80 weight%. Preferably the overall water content is in the range of from 25 to 65 weight%.

The aqueous coating composition can be applied to the surface of the building board by spray devices, such as a spry gun, for example. Alternatively, the coating composition can be brushed on the surface or applied with a doctor blade.

Typically the aqueous coating composition is applied in an amount of 10 g/m² to 300 g/m², preferably in the range of 20 g/m² to 200 g/m².

The aqueous coating composition applied to the building board is then cured to obtain a colour imaging layer on the surface of the building board. Curing can be achieved by drying the coating at a temperature between 80°C and 300°C for 1 minute to 1 hour. The coating is dry enough, if the resulting colour imaging layer is able to capture water-based inks. The coated building boards may be dried in an oven. Drying at a temperature between 150°C and 250°C in 2 to 150 minutes is preferred.

The thickness of the colour imaging layer on the building board is usually between 5 µm and 500 µm, preferably between 10 µm and 200 µm.

A brought range of constructions materials can be used as building boards, as long as the colour imaging layer can be sufficiently fixed on the surface. For example, cement plates, gypsum plates, ceramic plates, metal plates, wooden plates or polymer resin plates are suitable building boards. Preferably, a building board made from cement or gypsum is used. The adhesiveness of the colour imaging layer is excellent on these boards. Suitable are also fibre-reinforced building boards, particularly cement boards comprising glass fibres or polymer fibres.

The coated building board comprise preferably a sealing layer or priming layer. The sealing layer or priming layer can be applied on the surface of the building board. Thus, the surface of the building board to which the aqueous coating composition is applied, is formed by such a layer. More preferably, a priming layer is applied to provide background colour, particularly if a colour imaging layer without pigments is applied afterwards. For example, building boards comprising a sealing layer and a white priming layer are particularly useful. Sealing compositions and priming compositions particularly for cement or gypsum plates are known in the art.

Conventional priming compositions include for example aqueous emulsions of polyvinyl acetate, copolymers of vinyl acetate and ethylene, copolymers of acrylic acid esters and styrene and the like as well as aqueous solutions of polyvinyl alcohol. Typical sealers are water based or solvent-based acrylic resins, epoxy/urethane systems, silanes, silicates, siliconates, siloxanes etc.

A further embodiment of the present invention is a coated building board comprising a colour imaging layer of a cured coating composition as described above.

The colour imaging layer applied to at least a part of the surface of the coated building board of the present invention comprises preferably 30% to 95% by weight of an acrylic polymer and 0.5% to 50% by weight of the layer of a molecular sieve after curing.

The water content of the colour imaging layer is significantly reduced compared to the water content of the aqueous coating composition. The water content of the colour imaging layer is usually below 10 weight% of the weight of the molecular sieve, preferably below 5 weight% and particularly preferred below 3 weight%. Typically the water content is in the range of 0.1 to 2 weight%.

The weight ratio of the molecular sieve to the acrylic polymer in the colour imaging layer of the coated building board is preferably in the range of 1 : 1 to 1 : 100. More preferred is a ratio of 1 : 1,5 to 1 : 20 and most preferably the ratio is in the range of 1 : 2 to 1 : 10.

Preferred coated building boards of the present invention comprises a colour imaging layer comprising
a) 30 to 80 weight% of the acrylic polymer,
b) 5 to 40 weight% of the molecular sieve,
c) optionally 0.2 to 2 weight% of a defoamer,
d) optionally 0.2 to 4 weight% of a dispersant,
e) optionally 0 to 15% by weight of a matting agent,
f) optionally 3 to 10% by weight of a film former,
g) optionally 0.5 to 8% by weight of a thickener,
h) optionally up to 0.5% by weight of a biozide, and
i) optionally up to 0.5% by weight of a neutralizer.

Another preferred embodiment of the coated building board comprises a colour imaging layer comprising
a) 30 to 75 weight% of the acrylic polymer,
b) 5 to 35 weight% of the molecular sieve,
c) optionally 0.2 to 2 weight% of a defoamer,
d) optionally 0.2 to 4 weight% of a dispersant,
e) optionally 0 to 15% by weight of a matting agent,
f) optionally 3 to 10% by weight of a film former,
g) optionally 0.5 to 8% by weight of a thickener,
h) optionally up to 0.5% by weight of a biozide,
i) optionally up to 0.5% by weight of a neutralizer, and
j) 5 to 30 weight% of a pigment.

Preferred defoamers, dispersants, matting agents, film-formers, thickeners, and neutralizers are described above.

The coated building board is particularly useful for printing coloured patterns or images on the colour imaging layer with water-based ink. The water-based ink can be directly printed onto the colour imaging layer, for example by inkjet printing. The printed patterns can be easily individualized. The coated building boards are suitable for DIY (do it yourself) printing.

If a water-based ink is applied to the colour imaging layer, the ink is fixed quickly, colour bleeding is significantly reduced. The resolution of the printed pattern or image is improved. Additionally, fast penetration of the water-based ink into the colour imaging layer is avoided, contributing to high colour strength.

Without bound to any theory, the desired effects are achieved by an accelerated water adsorption from the water-based ink by the molecular sieve and simultaneously penetration of the colorants and pigments, provided as components of the water-based inks, into the colour imaging layer is significantly retarded. This leads to low colour bleeding and high colour strength.

The colour imaging layer is particularly useful for applying water-based inks with a water content of 40-70 wt.-% and a pigment content in the range of from 3 to 20 wt.-%. Typical water-based inks comprise further up to 40 wt.-% of a humectant, such as glycerine, propylene glycol etc., up to 2 wt.-% of a surfactant, such as polyoxyethylene alkyl ether, and a pH regulator. Optionally the water-based ink can comprise up to 10 wt.-% of an acrylic resin.

Thus, a further embodiment of the present invention is the use of a building board comprising a colour imaging layer as described herein as base material for inkjet printing with water-based inks.

### Examples:

### Example1 (E1):

40 parts by weight of deionized water, 45 parts by weight of acrylic emulsion (Mowilith DN 7070, from Archroma Co. Ltd.), 0.3 parts by weight of defoamer (BYK-022, from BYK Additives & Instruments), 0.15 parts by weight of dispersant (BYK-190, from BYK Additives & Instruments), 3.5 parts by weight of silica dioxide (SYLOID W 300, from W.R. Grace & Co.), 2.7 parts by weight of wax powder (Ceridust 8090 TP, from Clariant Chemicals Ltd) were mixed by a disperser at a shearing rate at 1000 rpm for 30 min, then 3 parts by weight of film-former (DOWANOL^{™} DPnB, from Dow Chemical), 0.5 parts by weight of thickener (Mowiplus TK-582, from Archroma Co. Ltd), 0.075 parts by weight of biocide (Acticide LA 0614, from Thor Chemie) were blended, and around 0.075 parts by weight of neutralizer 2-Amino-2-methyl-1-propyl alcohol (AMP 95, from Dow Chemical) were gradually added to adjust the pH to 8 - 10. The mixture is dispersed by a disperser at a shearing rate of 1500 rpm for 60 min. Finally, 4.7 parts by weight of molecular sieve (SYLOSIV A 3, from W.R. Grace & Co.) was blended into the mixture at a shearing rate of 1500 rpm for 30 min until fully dispersed to generate the coating composition.

The coating composition was sprayed onto a cement-fibre board with an amount of 80 g/m³ and cured in an oven at a temperature at 200 °C for 3 min to form the colour imaging layer. The cement-fibre board was pre-treated with a sealing coating and a white priming coating.

### Example 2 (E2):

30 parts by weight of de-ionized water, 40 parts by weight of acrylic emulsion (Neocryl XK-87, from DSM NeoResin), 0.25 parts by weight of defoamer (BYK-028, from BYK Additives & Instruments), 0.13 parts by weight of dispersant (BYK-190, from BYK Additives & Instruments), 3 parts by weight of SYLOID W 300 from W.R. Grace & Co.) and 2.2 parts by weight of ACEMATT TS100 (from Evonik) were mixed by a disperser at a shearing rate at 1000 rpm for 30 min, then 15 parts by weight of titanium dioxide (Colanyl White TQ-CN, from Clariant Chemicals Ltd), 2.5 parts by weight of film-former (DOWANOL^{™} DPnB, from Dow Chemical), 0.4 parts by weight of thickener (Mowiplus TK-582, from Archroma Co. Ltd), 0.06 parts by weight of biocide (Acticide LA 0614, from Thor Chemie) were blended, and around 0.06 parts by weight of neutralizer 2-Amino-2-methyl-1-propyl alcohol (AMP 95, from Dow Chemical) were gradually added to adjust the pH to 8 - 10. The mixture is dispersed by disperser at a shearing rate of 1500 rpm for 60 min. Finally, 6.4 parts by weight of molecular sieve (SYLOSIV A 3, from W.R. Grace & Co.) was blended into the mixture at a shearing rate of 1500 rpm for 30 min until fully dispersed to generate the coating composition.

The coating composition was sprayed onto a cement-fibre board with an amount of 140 g/m³ and cured in an oven with a temperature at 200 °C for 3 min to form the colour imaging layer. The cement-fibre board was pre-treated with a sealing coating.

### Example 3 (E3):

30 parts by weight of de-ionized water, 53.1 parts by weight of acrylic emulsion (Neocryl XK-87, from DSM NeoResin), 0.34 parts by weight of defoamer (BYK-022, from BYK Additives & Instruments), 0.17 parts by weight of dispersant (Dispersogen LFH, from Clariant Chemicals Ltd), 3 parts by weight of SYLOID W 300 from W.R. Grace & Co., 1.3 parts by weight of ACEMATT TS100 (from Evonik) and 2.7 parts by weight of Ceridust 8090 TP (from Clariant Chemicals Ltd) were mixed by a disperser at a shearing rate at 1000 rpm for 30 min, then 4 parts by weight of film-former (Texanol, from Eastman Chemical), 0.6 parts by weight of thickener (Acrysol ASE-60, from Dow Chemical), 0.24 parts by weight of biocide (Acticide LA 0614, from Thor Chemie) were blended, and around 0.15 parts by weight of neutralizer triethanolamine were gradually added to adjust the pH to 8 - 10. The mixture is dispersed by a disperser at a shearing rate of 1500 rpm for 60 min. Finally, 4.4 parts by weight of molecular sieve (SYLOSIV A 3, from W.R. Grace & Co.) was blended into the mixture at a shearing rate of 1500 rpm for 30 min until fully dispersed to generate the coating composition.

The coating composition was sprayed onto a gypsum foam board with an amount of 100 g/m³ and cured in an oven at a temperature of 200 °C for 3 min to form the colour imaging layer. The cement-fibre board was pre-treated with a sealing coating and a white priming coating.

### Example 4 (E4):

35 parts by weight of de-ionized water, 47 parts by weight of acrylic emulsion (Mowilith DN 7070, from Archroma Co. Ltd.), 0.3 parts by weight of defoamer (BYK-022, from BYK Additives & Instruments), 0.15 parts by weight of dispersant (BYK-190, from BYK Additives & Instruments), 5.5 parts by weight of silica dioxide (SYLOID W 300, from W.R. Grace & Co.) were mixed by a disperser at a shearing rate at 1000 rpm for 30 min, then 3 parts by weight of film-former (DOWANOL^{™} DPnB, from Dow Chemical), 0.5 parts by weight of thickener (Mowiplus TK-582, from Archroma Co. Ltd), 0.075 parts by weight of biocide (Acticide LA 0614, from Thor Chemie) were blended, and around 0.075 parts by weight of neutralizer 2-Amino-2-methyl-1-propyl alcohol (AMP 95, from Dow Chemical) were gradually added to adjust the pH to 8 - 10. The mixture is dispersed by disperser at a shearing rate of 1500 rpm for 60 min. Finally, 8.4 parts by weight of molecular sieve (SYLOSIV A 3, from W.R. Grace & Co.) was blended into the mixture at a shearing rate of 1500 rpm for 30 min until fully dispersed to generate the coating composition.

The coating composition was sprayed onto an aluminium composite board with an amount of 20 g/m³ and cured in an oven at a temperature of 150°C for 10 min to form the colour imaging layer. The cement-fibre board was pre-treated with a sealing coating and a white priming coating.

### Comparative Example 1 (CE1):

A cement-fibre board was pre-treated with a sealing coating and white priming coating, while no colour-imaging layer was applied.

### Comparative Example 2 (CE2):

Example 1 was reproduced in the absence of molecular sieves to generate a molecular sieve-free coating composition. The obtained coating composition was sprayed onto a cement-fibre board with an amount of 80 g/m³ and cured in an oven at a temperature of 200°C for 3 min to form the colour imaging layer. The cement-fibre board was pre-treated with a sealing coating and a white priming coating as described in CE1.

### Comparative Example 3 (CE3):

Example 1 was reproduced by replacing the molecular sieve with the same amount of bentonite.

### Comparative Example 4 (CE4):

A commercially available decorative acrylic paint was sprayed onto a cement-fibre board with an amount of 80 g/m³ and cured in an oven at a temperature of 200°C for 3 min to form a colour imaging layer. The cement-fibre board was pre-treated with a sealing coating and a white priming coating.

### Performance Evaluation:

The obtained building boards were arranged under an inkjet apparatus equipped with four colours of water-based inks, namely, Cyan, Magenta, Yellow and Black. The ejection and suspension of four inks from nozzle is individually controlled by a control unit. Inkjet printing was carried out by directly printing pre-designed images on the building boards. Then the building boards were dried in an oven with a temperature of 200°C for 3 min to cure the imaging layer. Preferably, a transparent top coating is sprayed onto the cured imaging layer for protection. The obtained images are visually evaluated. The evaluation criteria are as follows:
*Colour strength from 1 (very low) to 5 (high)
*Resolution from 1 (very blurry and dull, image is difficult to recognize) to 5 (image is clean and clear)
*Image stability from 1 (likely to become blurry by finger rubbing) to 5 (image is stable from rubbing or scratching)

| | Colour strength | Resolution | Image stability |
|---|---|---|---|
| E1 | 4 | 5 | 5 |
| E2 | 4 | 5 | 4 |
| E3 | 3 | 5 | 5 |
| E4 | 5 | 4 | 2 |
| CE1 | 1 | 2 | 5 |
| CE2 | 4 | 2 | 3 |
| CE3 | 4 | 3 | 3 |
| CE4 | 3 | 1 | 2 |

By amplifying the image for 60 times, the appearance of the ink dots can be assessed.

In CE1, when no imaging layer is applied, the obtained ink dots are very small and light with large interspaces. The ink dots are adsorbed by the porous base material, leading to low colour strength as well as low resolution. In CE2 and CE4, cured coatings without molecular sieve are applied. A penetration of the ink dots into the coating layer is avoided, thus, the colour strength is highly improved. However, since water based inks are hard to be cured, the ink dots fuse with each other and become irregular, leading to blurred images. The ink dots obtained in E1-E4 appear clear and dense granular, no colour bleeding is observed. Images on a building board comprising a colour-imaging layer according to the present invention (E1-E4) are much clearer than images on building boards of example CE1-CE4. The molecular sieves increases further the fixability of ink dots, as well as the stability of the images against rubbing and scratching.

## Claims

1. A method for preparation of a coated building board comprising a colour imaging layer comprising at least
a) application of an aqueous coating composition comprising
i) 20% to 80% by weight of the coating composition of an acrylic polymer emulsion, and
ii) 0.2% to 20% by weight of the coating composition of a molecular sieve on at least of a part of the surface of the building board, and
b) curing the coating composition.

2. The method of claim 1, wherein the molecular sieve is a microporous molecular sieve, preferably selected from the group consisting of zeolites.

3. The method of claim 1 or 2, wherein the at least 90% of the pores of the molecular sieve has pore diameters between 0,1 nm and 2 nm, preferably the molecular sieve is a 3 Å, 4 Å or 5 Å zeolite.

4. The method of any one of claims 1 to 3, wherein the acrylic polymer emulsion comprises an acrylic polymer obtainable by free radical polymerization of an acrylic monomer composition, wherein the acrylic monomers are selected from the group consisting of acrylate, methacrylate, alkyl acrylate, alkyl methacrylate, hydroxyalkyl acrylate, hydroxyalkyl methacrylate, epoxyalkyl acrylate, epoxyalkyl methacrylate, acrylonitrile, methacrylonitrile, acrylamide, methacrylamide, acrylic acid and mixtures thereof and optionally ethylenically unsaturated comonomers.

5. The method of 4, wherein the acrylic monomer composition comprises at least 50% by weight acrylic monomers and less than 50% by weight of ethylenically unsaturated comonomers.

6. The method of any one of claims 1 to 5, wherein the water content of the acrylic polymer emulsion is between 25% and 75% by weight.

7. The method of any one of claims 1 to 6, wherein the aqueous coating composition comprises a film-former selected from the group consisting of glycol ethers or glycol esters or combinations thereof.

8. The method of any one of claims 1 to 7, wherein the aqueous coating composition comprises up to 50% by weight of an additional polymer selected from the group of polyvinyl acetate, polyvinyl alcohol, and polyurethane.

9. The method of any one of claims 1 to 8, wherein the aqueous coating composition comprises a dispersant, thickener, filler, defoamer, neutralizer, biocide, matting agent and/or pigment.

10. A coated building board comprising a colour imaging layer of a cured coating composition of one of claims 1 to 9 on at least a part of the surface of the building board.

11. A coated building board comprising a colour imaging layer on at least a part of its surface, wherein the colour imaging layer comprises 30% to 95% by weight of the layer of an acrylic polymer and 0.5% to 50% by weight of the layer of a molecular sieve.

12. The coated building board of claim 11, wherein the weight ratio of the molecular sieve to the acrylic polymer in the colour imaging layer is from 1 :1 to 1 : 20.

13. The coated building board of claim 11 or 12, wherein the molecular sieve is a microporous sieve, preferably a zeolite, most preferably a 3 Å, 4 Å, 5 Å zeolite or mixtures thereof.

14. The coated building board of any one of claims 10 to 13, wherein the building board is a cement plate, gypsum plate, ceramic plate, metal plate, wooden plate or polymer resin plate.

15. Use of a building board of any one of claims 10 to 14 as base material for inkjet printing with water-based ink.

## Patentansprüche

1. Verfahren zur Zubereitung einer beschichteten Bauplatte, die eine Farbbildschicht umfasst, mindestens Folgendes umfassend
a) Aufbringen einer wässrigen Beschichtungszusammensetzung, Folgendes umfassend
i) 20 Masse-% bis 80 Masse-% der Beschichtungszusammensetzung aus einer Acryl-Polymeremulsion und
ii) 0,2 Masse-% bis 20 Masse-% der Beschichtungszusammensetzung eines Molekularsiebs auf mindestens einem Teil der Oberfläche der Bauplatte und
b) Härten der Beschichtungszusammensetzung.

2. Verfahren nach Anspruch 1, wobei das Molekularsieb ein mikroporöses Molekularsieb ist, das vorzugsweise aus der Gruppe ausgewählt ist, bestehend aus Zeolithen.

3. Verfahren nach Anspruch 1 oder 2, wobei mindestens 90 % der Poren des Molekularsiebs Porendurchmesser zwischen 0,1 nm und 2 nm aufweisen, das Molekularsieb vorzugsweise ein 3-Å-, 4-Å- oder 5-Å-Zeolith ist.

4. Verfahren nach einem der Ansprüche 1 bis 3, wobei die Acryl-Polymeremulsion ein Acryl-Polymer enthält, das durch radikalische Polymerisation einer Acryl-Monomerzusammensetzung, wobei die Acryl-Monomere aus der Gruppe ausgewählt sind, bestehend aus Acrylat, Methacrylat, Alkylacrylat, Alkylmethacrylat, Hydroxyalkylacrylat, Hydroxyalkylmethacrylat, Epoxyalkylacrylat, Epoxyalkylmethacrylat, Acrylnitril, Methacrylnitril, Acrylamid, Methacrylamid, Acrylsäure und Mischungen davon, und gegebenenfalls ethylenisch ungesättigten Comonomeren erhältlich ist.

5. Verfahren nach Anspruch 4, wobei die Acryl-Monomerzusammensetzung mindestens 50 Masse-% Acryl-Monomere und weniger als 50 Masse-% ethylenisch ungesättigte Comonomere enthält.

6. Verfahren nach einem der Ansprüche 1 bis 5, wobei der Wassergehalt der Acryl-Polymeremulsion zwischen 25 Masse-% und 75 Masse-% liegt.

7. Verfahren nach einem der Ansprüche 1 bis 6, wobei die wässrige Beschichtungszusammensetzung einen Filmbildner enthält, der aus der Gruppe ausgewählt ist, bestehend aus Glycolethern oder Glycolestern oder Kombinationen davon.

8. Verfahren nach einem der Ansprüche 1 bis 7, wobei die wässrige Beschichtungszusammensetzung bis zu 50 Masse-% eines zusätzlichen Polymers enthält, das aus der Gruppe ausgewählt ist, bestehend aus Polyvinylacetat, Polyvinylalkohol und Polyurethan.

9. Verfahren nach einem der Ansprüche 1 bis 8, wobei die wässrige Beschichtungszusammensetzung ein Dispergiermittel, ein Dickungsmittel , ein Füllmittel, ein Entschäumungsmittel, einen Neutralisierer, ein Biozid, ein Mattierungsmittel und/oder ein Pigment enthält.

10. Beschichtete Bauplatte, eine Farbbildschicht aus einer gehärteten Beschichtungszusammensetzung nach einem der Ansprüche 1 bis 9 auf mindestens einem Teil der Oberfläche der Bauplatte umfassend.

11. Beschichtete Bauplatte, eine Farbbildschicht auf mindestens einem Teil ihrer Oberfläche umfassend, wobei die Farbbildschicht 30 Masse-% bis 95 Masse-% der Schicht aus einem Acryl-Polymer und 0,5 Masse-% bis 50 Masse-% der Schicht eines Molekularsiebs enthält.

12. Beschichtete Bauplatte nach Anspruch 11, wobei das Masseverhältnis des Molekularsiebs zu dem Acryl-Polymer in der Farbbildschicht zwischen 1 : 1 und 1 : 20 ist.

13. Beschichtete Bauplatte nach Anspruch 11 oder 12, wobei das Molekularsieb ein mikroporöses Sieb ist, vorzugsweise ein Zeolith, ganz besonders bevorzugt ein 3-Å-, 4-Å-, 5-Å-Zeolith oder Mischungen davon.

14. Beschichtete Bauplatte nach einem der Ansprüche 10 bis 13, wobei die Bauplatte eine Zementplatte, eine Gipsplatte, eine Keramikplatte, eine Metallplatte, eine Holzplatte oder eine Polymerharzplatte ist.

15. Verwenden einer Bauplatte nach einem der Ansprüche 10 bis 14 als Basismaterial zum Tintenstrahldruck mit Tinte auf Wasserbasis.

## Revendications

1. Procédé de préparation d'un panneau de construction revêtu comprenant une couche d'imagerie en couleur comprenant au moins
a) l'application d'une composition aqueuse de revêtement comprenant
i) 20 % à 80 % en poids de la composition de revêtement d'une émulsion de polymère acrylique, et
ii) 0,2 % à 20 % en poids de la composition de revêtement d'un tamis moléculaire sur au moins une partie de la surface du panneau de construction, et
b) le durcissement de la composition de revêtement.

2. Procédé selon la revendication 1, dans lequel le tamis moléculaire est un tamis moléculaire microporeux, de préférence choisi dans le groupe constitué de zéolites.

3. Procédé selon la revendication 1 ou 2, dans lequel au moins 90 % des pores du tamis moléculaire ont des diamètres de pore compris entre 0,1 nm et 2 nm, de préférence le tamis moléculaire est une zéolite de 3 Å, 4 Å ou 5 Å.

4. Procédé selon l'une quelconque des revendications 1 à 3, dans lequel l'émulsion de polymère acrylique comprend un polymère acrylique pouvant être obtenu par polymérisation radicalaire d'une composition de monomères acryliques, dans lequel les monomères acryliques sont choisis dans le groupe constitué d'acrylate, méthacrylate, acrylate d'alkyle, méthacrylate d'alkyle, acrylate d'hydroxyalkyle, méthacrylate d'hydroxyalkyle, acrylate d'époxyalkyle, méthacrylate d'époxyalkyle, acrylonitrile, méthacrylonitrile, acrylamide, méthacrylamide, acide acrylique et des mélanges de ceux-ci et facultativement de comonomères insaturés éthyléniquement.

5. Procédé selon la revendication 4, dans lequel la composition de monomères acryliques comprend au moins 50 % en poids de monomères acryliques et moins de 50 % en poids de comonomères insaturés éthyléniquement.

6. Procédé selon l'une quelconque des revendications 1 à 5, dans lequel la teneur en eau de l'émulsion de polymère acrylique est comprise entre 25 % et 75 % en poids.

7. Procédé selon l'une quelconque des revendications 1 à 6, dans lequel la composition aqueuse de revêtement comprend un agent filmogène choisi dans le groupe constitué d'éthers de glycol ou d'esters de glycol ou des combinaisons de ceux-ci.

8. Procédé selon l'une quelconque des revendications 1 à 7, dans lequel la composition aqueuse de revêtement comprend jusqu'à 50 % en poids d'un polymère supplémentaire choisi dans le groupe du poly(acétate de vinyle), de l'alcool polyvinylique et du polyuréthane.

9. Procédé selon l'une quelconque des revendications 1 à 8, dans lequel la composition aqueuse de revêtement comprend un dispersant, un épaississant, une charge, un agent antimousse, un agent neutralisant, un biocide, un agent matifiant et/ou un pigment.

10. Panneau de construction revêtu comprenant une couche d'imagerie en couleur d'une composition de revêtement durcie selon l'une des revendications 1 à 9 sur au moins une partie de la surface du panneau de construction.

11. Panneau de construction revêtu comprenant une couche d'imagerie en couleur sur au moins une partie de sa surface, dans lequel la couche d'imagerie en couleur comprend 30 % à 95 % en poids de la couche d'un polymère acrylique et 0,5 % à 50 % en poids de la couche d'un tamis moléculaire.

12. Panneau de construction revêtu selon la revendication 11, dans lequel le rapport en poids du tamis moléculaire au polymère acrylique dans la couche d'imagerie en couleur est de 1:1 à 1:20.

13. Panneau de construction revêtu selon la revendication 11 ou 12, dans lequel le tamis moléculaire est un tamis microporeux, de préférence une zéolite, de manière préférée entre toutes une zéolite de 3 Å,4 Å, 5 Å ou des mélanges de celles-ci.

14. Panneau de construction revêtu selon l'une quelconque des revendications 10 à 13, le panneau de construction étant une plaque de ciment, une plaque de plâtre, une plaque de céramique, une plaque de métal, une plaque de bois ou une plaque de résine polymère.

15. Utilisation d'un panneau de construction selon l'une quelconque des revendications 10 à 14 en tant que matériau de base pour l'impression à jet d'encre avec une encre à base d'eau.
